# EUROPÄISCHE PATENTSCHRIFT

(11) **EP 3 712 976 B1**
(45) Veröffentlichungstag und Bekanntmachung des Hinweises auf die Patenterteilung: **09.04.2025**
(21) Anmeldenummer: 20159655.8
(22) Anmeldetag: 26.02.2020
(51) Int. Cl.: H01M 50/00

(54) **BATTERIEMODUL UND KRAFTFAHRZEUG**
BATTERY MODULE AND MOTOR VEHICLE
MODULE DE BATTERIE ET VÉHICULE AUTOMOBILE

(30) Priorität: 18.03.2019 DE 102019203607
(43) Veröffentlichungstag der Anmeldung: 23.09.2020
(73) Patentinhaber: VOLKSWAGEN AG, 38440 Wolfsburg (DE)
(72) Erfinder: BORNEMANN, Krino, 39326 Kleinammersleben (Niedere Börde) (DE); HERTEN, Helge, 38102 Braunschweig (DE); HOHM, Volker, 38112 Braunschweig (DE); KAUFMANN, Jörg, 38550 Isenbüttel (DE); SCHAAR, Bastian, 38116 Braunschweig (DE); STRÖHLEIN, Tobias, 38110 Braunschweig (DE); VOIGT, Arne-Christian, 38104 Braunschweig (DE); VOLKMAR, Henning, 38550 Isenbüttel (DE); WESCHE, Frank, 38458 Velpke (DE)
(74) Vertreter: FDST Patentanwälte

(56) Entgegenhaltungen:
- DE-A1- 102016 002 866
- DE-A1- 102017 121 261
- DE-A1- 102018 003 173
- JP-A- 2002 222 639

## Beschreibung

Die Erfindung betrifft ein Batteriemodul für ein Kraftfahrzeug sowie ein Kraftfahrzeug mit einem solchen Modul.

Batteriemodule kommen bei Elektro-Kraftfahrzeugen zum Einsatz, um eine Mehrzahl von insbesondere wiederaufladbaren Batteriezellen (auch: Sekundärzellen oder Akkumulatoren) aufzunehmen, miteinander zu verschalten und eine Ausgangsspannung einem Bordnetz des Kraftfahrzeugs, insbesondere einer elektrischen Kraftmaschine zur Verfügung zu stellen. Eine weitere Funktion der Batteriemodule ist auch der Schutz der aufgenommenen Batteriezellen vor mechanischen Einflüssen, beispielsweise Aufprallkräfte bei einem Unfall, und/oder vor Feuchtigkeitseinbruch.

Als mechanische Einflüsse kommen dabei jeweils vergleichsweise flächig wirkende Lasten, bspw. bei einem Unfall mit einem anderen Fahrzeug, in Fahrzeuglängs- und/oder -querrichtung sowie bspw. im Fall eines Überschlags auch entlang der Fahrzeughochrichtung in Frage. Zudem können Lasten auch vergleichsweise punktuell oder linienförmig auf das Batteriemodul wirken, bspw. bei Kollisionen mit Säulen, Masten und/oder Bäumen und/oder wenn das Kraftfahrzeug auf einem Poller aufsitzt. Die Batteriezellen sollten in solchen Fällen geschützt sein, um Beschädigungen ihrer Struktur und unter Umständen damit verbundenem Austreten von Medien wie z. B. Elektrolytflüssigkeit, im Fall eines Kurzschlusses auch von Rauchgasen und dergleichen zu verhindern.

Aus DE 10 2018 003 173 A1 ist eine Speichereinrichtung zum Speichern von elektrischer Energie, mit einem Gehäuse, in dessen Aufnahmeraum mehrere Speicherzellen zum Speichern der elektrischen Energie aufgenommen sind, und mit einer Kühleinrichtung bekannt. Letztere weist zumindest einen auf einer Seite des Gehäuses angeordneten Einlass, über welchen in den Aufnahmeraum eine Kühlflüssigkeit einleitbar ist, und zumindest einen Auslass auf, über welchen die Kühlflüssigkeit aus dem Aufnahmeraum abführbar ist. Die Kühleinrichtung weist außerdem eine Leiteinrichtung auf, mittels welcher der Aufnahmeraum in einen stromab des Einlasses angeordneten ersten Bereich und einen stromab des ersten Bereiches angeordneten zweiten Bereich unterteilt ist. Letzterem sind die Kühlflüssigkeit aus dem ersten Bereich zuführbar und der stromab des zweiten Bereiches angeordnete Auslass zugeordnet, welcher auf derselben Seite wie der Einlass an dem Gehäuse angeordnet.

DE 10 2016 002 866 A1 beschreibt eine Stützeinrichtung zur mechanischen Stabilisierung von wenigstens einer Batteriezelle in einem Batteriemodul, wobei die Stützeinrichtung aus einem Material ausgebildet ist, das eine Mehrzahl an getrennt voneinander angeordneten Durchgangsöffnungen aufweist oder aus einem amorphen Material ausgebildet ist.

JP 2002 222 639 A, welche die Basis für den Oberbegriff von Anspruch 1 bildet, beschreibt ein Monoblock Batterie Gehäuse, das mehrere Zwischenwände zur Unterteilung des Gehäuses in eine Mehrzahl von Kammern zur Aufnahme jeweilige Batteriezellen aufweist. In den Zwischenwänden sind Öffnungen zur Durchführung von Kontaktierungsleitungen zwischen Batteriezellen benachbarter Kammern angeordnet.

Der Erfindung liegt die Aufgabe zugrunde, die Sicherheit eines Batteriemoduls zu erhöhen.

Diese Aufgabe wird erfindungsgemäß gelöst durch ein Batteriemodul mit den Merkmalen des Anspruchs 1. Des Weiteren wird diese Aufgabe erfindungsgemäß gelöst durch ein Kraftfahrzeug mit den Merkmalen des Anspruchs 3. Weitere vorteilhafte und teils für sich erfinderischer Ausführungsformen und Weiterbildungen sind in den Unteransprüchen und der nachfolgenden Beschreibung dargelegt.

Das erfindungsgemäße Batteriemodul dient vorzugsweise zum Einsatz in einem (insbesondere landgestützten) Kraftfahrzeug. Das Batteriemodul umfasst dazu ein Modulgehäuse, das ein langgestrecktes kastenartiges Hohlprofil aufweist, das wiederum eine Zellkammer zur mechanisch schützenden Aufnahme einer Mehrzahl von Batteriezellen in vier Raumrichtungen - die bevorzugt paarweise senkrecht aufeinander sowie senkrecht zur Längserstreckung des Hohlprofils stehen - umgrenzt. Die Zellkammer ist dabei des Weiteren entlang ihrer Längserstreckung mittels wenigstens einer schottartigen Stützwand, die vorzugsweise in einen die Zellkammer bildenden Hohlraum des Hohlprofils eingebracht ist, in wenigstens zwei Zellkammerabschnitte unterteilt. Die Stützwand weist dabei innerhalb ihrer Wandfläche mindestens eine Öffnung, vorzugsweise wenigstens zwei Öffnungen zur Durchführung von Batteriezellen und/oder von Kontaktierungsmitteln zwischen den Batteriezellen zweier aneinander angrenzender Zellkammerabschnitte auf. Da die jeweilige Öffnung innerhalb der Wandfläche angeordnet ist, handelt es sich bei dieser vorzugsweise um eine "Binnenöffnung" (auch: Durchbruch), ist also von der Stützwand umlaufend umrandet.

Die Anordnung von schottartigen Stützwänden führt vorteilhafterweise zur Aussteifung des Hohlprofils zumindest quer zu dessen Längserstreckung. Insbesondere kann ein Eindrücken oder Einwölben der die Zellkammer begrenzenden Wände - insbesondere Längswände des Hohlprofils - begrenzt oder unterbunden werden. Dadurch ist vorteilhafterweise ein Risiko verringert, dass bei Belastung des Hohlprofils eine Längswand des Hohlprofils in die Zellkammer hinein deformiert wird und dabei externe Lasten auf eine oder mehrere Batteriezellen überträgt. Aufgrund der jeweiligen Öffnung in der jeweiligen Stützwand können die Batteriezellen aber dennoch vergleichsweise frei in der Zellkammer oder dem jeweiligen Zellkammerabschnitt angeordnet und untereinander kontaktiert werden. Des Weiteren führt die jeweilige Öffnung auch zu einer Gewichtsreduktion der Stützwand. Ferner wird ermöglicht, dass die jeweilige Stützwand umlaufend an den die Zellkammer begrenzenden Wänden anliegen kann, was die Stabilität des Hohlprofils erhöht.

In bevorzugter Ausgestaltung ist die jeweilige Öffnung der Stützwand in ihrer Geometrie, d. h. insbesondere in ihrer Kontur, abhängig von dem in dem Batteriemodul einzusetzenden und im bestimmungsgemäßen Einsatzzustand des Batteriemoduls eingesetzten Typ von Batteriezellen.

Weiter bevorzugt ist die jeweilige Öffnung - sofern sie einem Polygon nachgebildet ist - mit abgerundeten Ecken ausgebildet, um unter Belastung auftretende Spannungsspitzen zu reduzieren oder zu verhindern und somit die Stabilität der Stützwand nur möglichst gering zu schwächen.

Als Batteriezellen sind sogenannte Pouch-Zellen (deren Elektroden und Elektrolyt insbesondere nicht in einer steifen oder starren Hülle aufgenommen, sondern vielmehr in einem vorzugsweise flexiblen Folienbeutel eingeschweißt sind) in der Zellkammer aufgenommen. Bevorzugt sind die Pouch-Zellen dabei durch die Öffnungen der Stützwand hindurch gesteckt und erstrecken sich im Wesentlichen über wenigstens zwei aneinander angrenzende Zellkammerabschnitte, vorzugsweise über annähernd die gesamte Länge der Zellkammer. Dies ist dahingehend vorteilhaft, dass Pouch-Zellen häufig eine vergleichsweise große Längserstreckung aufweisen. Durch die jeweilige Stützwand ist somit nicht nur die Zellkammer versteift, sondern die Pouch-Zellen können gegebenenfalls unter Einsparung weiterer Haltemittel in einer räumlich definierten Anordnung zueinander gehalten werden.

In einer bevorzugten Ausführung ist die jeweilige Öffnung für die Pouch-Zellen nach Art eines Langlochs ausgebildet. Insbesondere weisen die Öffnungen der jeweiligen Stützwand eine rechteckförmige Geometrie mit abgerundeten Ecken auf und sind größenmäßig an den Querschnitt der Pouch-Zellen (optional mehrerer zu einem Paket gestapelter Pouch-Zellen) angepasst. Das heißt, dass die Breite des die Öffnung bildenden Langlochs in der Stützwand etwa der Dicke einer einzelnen Pouch-Zelle oder entsprechende mehrere Pouch-Zellen entspricht, das entsprechende Maß zur einfachen Montage vorzugsweise geringfügig überschreitet. Entsprechendes gilt für die Längserstreckung des Langlochs, die an die Breite der Pouch-Zellen analog angepasst ist. Eine Verschiebung der Pouch-Zellen innerhalb der Zellkammer - auch aufgrund elastischer Deformation der Pouch-Zelle - kann somit auch unterbunden oder verringert werden.

In einer nicht erfindungsgemäßen Ausgestaltung können als Batteriezellen insbesondere zylindrische Rundzellen in der Zellkammer aufgenommen sein. Diese Rundzellen sind dabei vorzugsweise mit ihrer Zylinderachse senkrecht zur Stützwand ausgerichtet. Weiter bevorzugt sind dabei jeweils zwei Rundzellen, die in aneinander angrenzenden Zellkammerabschnitten angeordnet sind, mit ihren stirnseitigen Kontaktelementen (die insbesondere ähnlich zu den Polkontakten einer handelsüblichen Rundzelle ausgebildet sind) über die Stützwand hinweg - insbesondere durch eine jeweils zugeordnete Öffnung hindurch - kontaktiert. Jeder Zellkammerabschnitt bildet in diesem Fall vorzugweise eine Teilkammer, in der eine jeweils zugeordnete Menge an Rundzellen aufgenommen ist.

Im Fall der Rundzellen sind die Öffnungen bevorzugt als (insbesondere kreis-) runde Durchbrüche durch die Stützwand ausgeführt.

In einer weiteren nicht erfindungsgemäßen Ausführung können als Batteriezellen prismatische Blockzellen in der Zellkammer aufgenommen sein. Diese weisen insbesondere eine näherungsweise quaderartige Struktur auf. Diese Blockzellen tragen dabei vorzugsweise an einer Oberseite - die im bestimmungsgemäßen Einsatzzustand auch zur Oberseite des Batteriemoduls gewandt ist - Kontaktelemente. Im Rahmen dieser Ausführung weist die oder die jeweilige Stützwand in einem oberen Teilbereich wenigstens eine, insbesondere zwei Öffnungen auf, durch die hindurch jeweils einander zugeordnete Kontaktelemente der Blockzellen zweier aneinander angrenzender Zellkammerabschnitte miteinander - bspw. mittels eines Verbindungskabels, einer flexiblen Leiterplatte oder dergleichen - verschaltet sind. Vorzugsweise ist diese Öffnung bzw. sind diese beiden Öffnungen dabei als Langlöcher ausgeführt.

Insbesondere für den Fall des Einsatzes von Rundzellen oder Blockzellen ist in einer zweckmäßigen Ausführung an die jeweilige Stützwand für jede Batteriezelle eines Zellkammerabschnitts ein Zellgehäuse in Form einer ringartig geschlossenen Wand angebunden. In dem jeweiligen Zellgehäuse sind dabei Elektroden und Elektrolyt der jeweiligen Batteriezelle bevorzugt unter Wegfall ihres üblichen Zellgehäuses (d. h. das üblicherweise fest mit der Batteriezelle verbundene Gehäuse) angeordnet. Im Fall der Rundzellen ist die Wand des jeweiligen Zellgehäuses vorzugsweise kreisringartig ausgebildet. Im Fall der Blockzellen ist die Wand insbesondere kastenartig ausgebildet. In dieser Ausführung können also vorteilhafterweise weitere Funktionen von der Stützwand übernommen werden, nämlich einerseits die Einhausung der jeweiligen Zellen an sich sowie die geometrisch vorgegebene Halterung der Zellen innerhalb des jeweiligen Zellkammerabschnitts.

Vorzugsweise schließt die jeweilige ringartig geschlossene Wand wenigstens eine Öffnung der Stützwand ein, umrandet diese also. Dadurch kann jede in dem jeweiligen Zellgehäuse aufgenommene Batteriezelle mit in dem angrenzenden Zellkammerabschnitt angeordneten Batteriezellen verschaltet werden.

In einfacher Ausführung ist das Material, aus dem die Stützwand gebildet ist, ein metallisches Material. In einer vorteilhaften Ausführung ist allerdings die Stützwand - gegebenenfalls auch das jeweilige an diese angebundene Zellgehäuse - aus einem kurzfaserverstärkten Kunststoff spritzgegossen. Bei dem Kunststoff handelt es sich dabei vorzugsweise um einen Thermoplasten, bspw. ein Polyamid oder ein Polypropylen. Alternativ handelt es sich bei dem Kunststoff um einen Duroplasten. Die Ausbildung der Stützwand durch einen kurzfaserverstärkten Kunststoff ermöglicht dabei eine leichtgewichtige, aber dennoch vergleichsweise steife sowie mit hoher Passgenauigkeit fertigbare Struktur der Stützwand.

Vorzugsweise ist die jeweilige Stützwand separat gefertigt und nachträglich in das Hohlprofil eingebracht sowie an ihrer bestimmungsgemäßen Position fixiert - bspw. mittels Kleben, einer Verschraubung von der Außenseite her oder dergleichen.

In einer optionalen Variante ist die Stützwand in das Hohlprofil eingespritzt und bildet dabei somit eine stoffschlüssige Verbindung mit dem Hohlprofil aus. Bspw. wird der Kunststoff dabei durch eine Einspritzöffnung in dem Hohlprofil in die Zellkammer eingebracht. Die entsprechenden Formgebungswände werden in diesem Fall insbesondere durch Stempel gebildet, die längsseitig in das Hohlprofil eingeschoben werden.

Das erfindungsgemäße Kraftfahrzeug weist ein Batteriemodul der vorstehend beschriebenen Art, bevorzugt mehrere dieser Batteriemodule auf. Vorzugsweise umfasst das Kraftfahrzeug auch eine elektrische Kraftmaschine zum Antrieb des Kraftfahrzeugs. Die Batteriemodule bilden in diesem Fall eine auch als "Traktionsbatterie" bezeichnete Batterievorrichtung.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend werden Ausführungsbeispiele der Erfindung anhand einer Zeichnung näher erläutert. Darin zeigen:
- Fig. 1: in einer schematischen Draufsicht ein Batteriemodul in teildurchsichtiger Darstellung,
- Fig. 2: in einer Teilschnittdarstellung II-II gemäß Fig. 1 das Batteriemodul,
- Fig. 3: in Ansicht gemäß Fig. 1 ein weiteres Ausführungsbeispiel des Batteriemoduls,
- Fig. 4: in Ansicht gemäß Fig. 2 das Batteriemodul gemäß Fig. 3,
- Fig. 5: in Ansicht gemäß Fig. 1 wiederum ein weiteres Ausführungsbeispiel des Batteriemoduls,
- Fig. 6: in Ansicht gemäß Fig. 2 das Batteriemodul gemäß Fig. 5,
- Fig. 7: in Ansicht gemäß Fig. 2 ein weiteres Ausführungsbeispiel des Batteriemoduls,
- Fig. 8: in einer schematischen Seitenansicht eine Stützwand des Batteriemoduls gemäß Fig. 7, und
- Fig. 9: in einer schematischen Seitenansicht ein Kraftfahrzeug mit mehreren Batteriemodulen.

Einander entsprechende Teile sind in allen Figuren stets mit gleichen Bezugszeichen versehen.

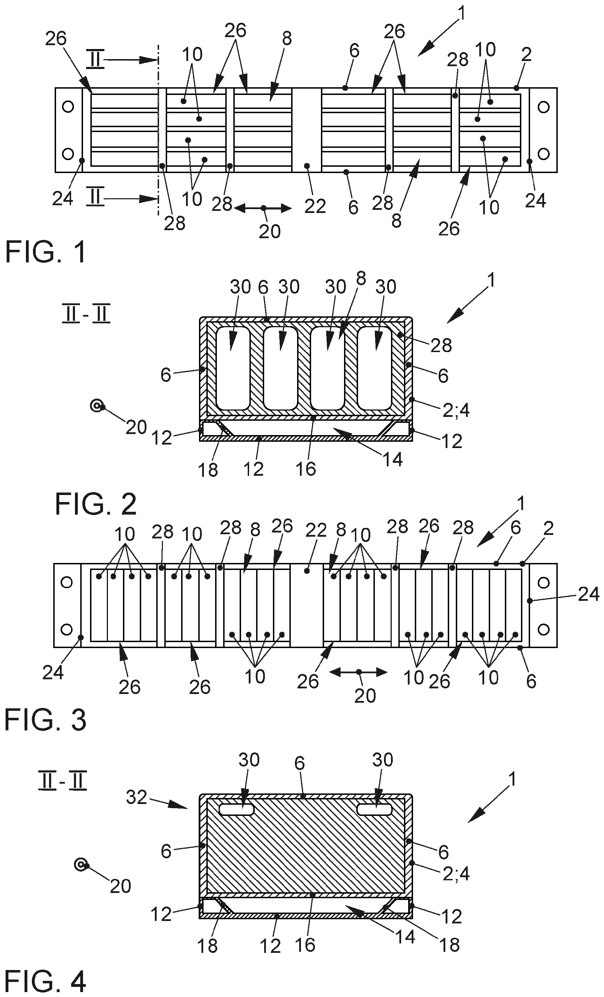

In Fig. 1 ist schematisch ein Batteriemodul 1 dargestellt. Dieses umfasst ein im Folgenden näher dargestelltes Modulgehäuse 2. Dieses ist in Fig. 1 teildurchsichtig dargestellt. Das Modulgehäuse 2 ist durch ein Hohlprofil 4, s. Fig. 2, gebildet. Das Hohlprofil 4 umgrenzt mit drei Längswänden 6, die gemeinsam ein U-Profil bilden, eine Zellkammer 8, in der im bestimmungsgemäßen Einsatzzustand (vergleiche Fig. 1) mehrere Batteriezellen 10 angeordnet sind. Unterseitig grenzt an die Zellkammer 8 eine zur Außenseite von drei Seitenwänden 12 umgrenzte Stützkammer 14 an. Die Zellkammer 8 und die Stützkammer 14 sind dabei durch eine Trennwand 16 voneinander abgetrennt. Das Hohlprofil 4 umgrenzt die Zellkammer 8 mithin in vier Raumrichtungen, die paarweise aufeinander senkrecht stehen (d. h. in der Zeichnungsebene gesehen nach oben, nach unten, nach links und nach rechts). In einer optionalen Variante dieses Ausführungsbeispiels sind zur weiteren Versteifung der Seitenwände 12 in der Stützkammer 14 zwei schräg angeordnete Versteifungswände 18 eingezogen.

Das Hohlprofil 4 ist konkret durch ein langgestrecktes und kastenartig geformtes Aluminium-Strangpress-Profil gebildet. Außerdem stellt das Hohlprofil 4 ein Strukturbauteil dar, das einwirkende Lasten - beispielsweise im Crashfall - aufnehmen und ableiten (auch: "weiterleiten") kann. Die im wesentlichen Kraftfluss liegenden Wände sind dabei die Längswände 6 sowie die Seitenwände 12. Die Längswände 6 sowie die Seitenwände 12 weisen deshalb gegenüber der Trennwand 16 in der Regel eine erhöhte Wandstärke auf.

Im vorliegenden Ausführungsbeispiel weist das Batteriemodul 1 zwei in Längsrichtung 20 aufeinanderfolgend angeordnete Zellkammern 8 auf, die durch einen Anschlussblock 22 voneinander getrennt sind. An diesem Anschlussblock 22 laufen die Batteriezellen 10 verbindende Verbindungselemente - z. B. Kabel, Flexleiter oder dergleichen - zusammen und sind aus dem Hohlprofil 4 mediendicht herausgeführt (nicht näher dargestellt).

Das Hohlprofil 4 und somit auch die Zellkammern 8 sind im bestimmungsgemäßen Einsatzzustand des Batteriemoduls 1 stirnseitig, d. h. quer zur Längserstreckung der Längswände 6, durch jeweils einen Abschlussdeckel 24 mediendicht abgeschlossen. Konkret ist der Abschlussdeckel 24 auf das Hohlprofil 4 aufgeschweißt. Dadurch sind die in der jeweiligen Zellkammer 8 angeordneten Batteriezellen 10 vor Umwelteinflüssen geschützt.

Jede Zellkammer 8 ist außerdem in mehrere Zellkammerabschnitte 26 unterteilt, die in Längsrichtung 20 des Modulgehäuses 2 gesehen aufeinanderfolgen. Zur Unterteilung sind in den Zellkammern 8 schottartige Stützwände 28 angeordnet. Diese Stützwände 28 dienen unter anderem zur Versteifung des Hohlprofils 4 gegen ein Einwölben der Längswände 6.

Die Stützwände 28 weisen Durchbrüche (im Folgenden als Öffnungen 30 bezeichnet) auf, die innerhalb der Wandfläche der jeweiligen Stützwand 28 liegen. D. h. die Öffnungen 30 sind nicht in Richtung der Flächenerstreckung der jeweiligen Stützwand 28 geöffnet.

Im Ausführungsbeispiel gemäß Fig. 1 und 2 liegen die Batteriezellen 10 in Form von sogenannten Pouch-Zellen vor, die in Längsrichtung 20 ausgerichtet in der jeweiligen Zellkammer 8 aufgenommen sind. Die Pouch-Zellen erstrecken sich dabei etwa über die Länge der jeweiligen Zellkammer 8. Im vorliegenden Ausführungsbeispiel sind in jeder Zellkammer 8 vier Pakete, die jeweils durch mehrere Pouch-Zellen gebildet sind, angeordnet. Die Öffnungen 30 der Stützwände 28 sind dabei an die Außenkontur, konkret an das Profil der Pouch-Zellen angepasst und deshalb als rechteckförmige Langlöcher mit abgerundeten Ecken ausgebildet, die die Querschnittsabmessungen der Pouch-Zellen nur geringfügig überschreiten. Die Pouch-Zellen sind in Längsrichtung 20 durch die jeweiligen Öffnungen 30 hindurchgeschoben und somit mittels der Stützwände 28 zueinander beabstandet in der jeweiligen Zellkammer 8 gehaltert.

In einem alternativen Ausführungsbeispiel, dargestellt in Fig. 3 und 4, sind die Batteriezellen 10 als prismatische Blockzellen ausgebildet, die quer zur Längsrichtung 20 in einem jeden Zellkammerabschnitt 26 angeordnet sind. Die Stützwände 28 weisen in diesem Fall nur zwei Öffnungen 30 auf, die in einem oberen Bereich 32 der jeweiligen Stützwand 30 angeordnet sind. Durch diese Öffnungen 30 sind Polverbinder, mittels derer ebenfalls an einer Oberseite der Blockzellen angeordnete Anschlusskontakte oder "Pole" verbunden sind, in Richtung zum Anschlussblock 22 geführt (nicht näher dargestellt).

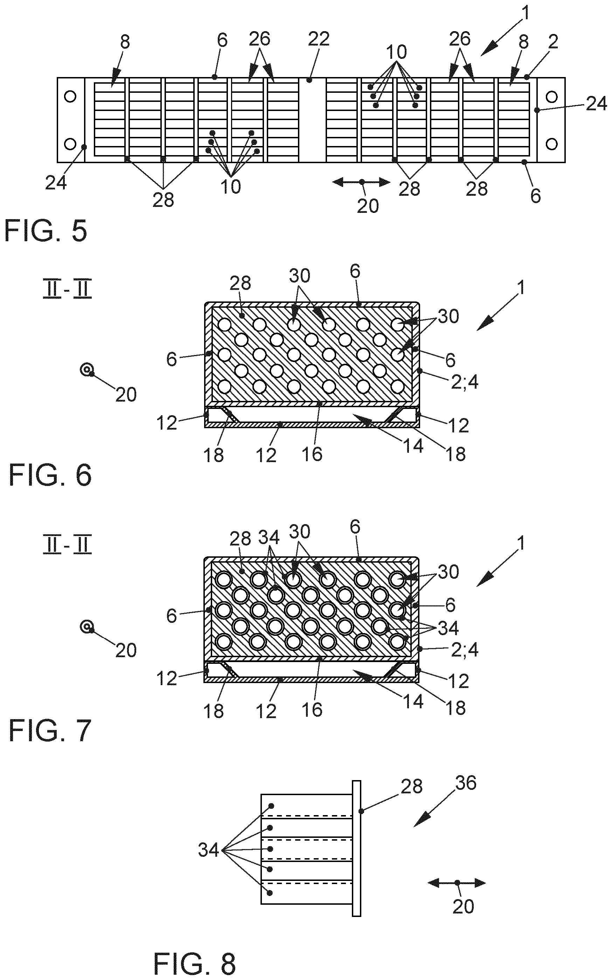

**In** einem weiteren Ausführungsbeispiel, dargestellt in Fig. 5 und 6, sind die Batteriezellen 10 als zylindrische Rundzellen ausgebildet. Die Rundzellen sind dabei in Längsrichtung 20 ausgerichtet in den jeweiligen Zellkammerabschnitten 26 angeordnet. Die Stützwände 28 weisen dabei eine der Zahl der Rundzellen entsprechende Vielzahl von Öffnungen 30 auf, die ebenfalls rund ausgebildet und rasterartig zueinander angeordnet sind. Durch die Öffnungen 30 hindurch sind die Rundzellen der aneinander angrenzenden Zellkammerabschnitte 26 mit ihren entsprechenden Polen miteinander kontaktiert.

In Fig. 7 und 8 ist ein weiteres Ausführungsbeispiel des Batteriemoduls 1, konkret der jeweiligen Stützwand 28 dargestellt. Die Stützwand 28 weist dabei senkrecht zu ihrer Flächenerstreckung ausgerichtete Zellgehäuse 34 auf, die durch eine um die jeweilige Öffnung 30 umlaufende, ringförmig geschlossene Wand gebildet sind. Die Stützwand 28 bildet gemeinsam mit den Zellgehäusen 34 ein Stützwandmodul 36. Die Zellgehäuse 34 dienen dabei zum Ersatz der Umhüllungen der Batteriezellen 10, im vorliegenden Ausführungsbeispiel der Rundzellen. D. h. im bestimmungsgemäßen Einsatzzustand sind die Elektroden und das Elektrolyt der jeweiligen Batteriezelle 10 unter Wegfall der üblichen, eigenen Umhüllung in das korrespondierende Zellgehäuse 34 eingesetzt. Die Zellgehäuse 34 sind dabei optional endseitig durch entsprechende Polkappen abgeschlossen, mittels derer die Kontaktierung der einzelnen Rundzellen in Längsrichtung 20 wie vorstehend beschrieben durch die Öffnungen 30 hindurch erfolgt. Dadurch ergibt sich einerseits eine vorgegebene Anordnung und integrierte Halterung der Batteriezellen 10 an der jeweiligen Stützwand 28 sowie eine vereinfachte Montage, da bspw. die mit den Batteriezellen 10 bestückte Stützwand 28 wie ein Magazin in das Hohlprofil 4 eingeschoben werden kann.

Optional ist in diesem Fall eine weitere Stützwand 28 an dem Anschlussblock 22 anliegend angeordnet, oder eine der Stützwände 28 weist zu beiden Seiten die vorstehend beschriebenen Zellgehäuse 34 auf (nicht näher dargestellt).

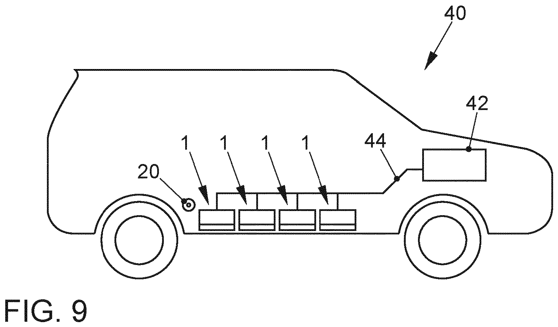

In Fig. 9 ist schematisch ein Kraftfahrzeug 40 dargestellt. Das Kraftfahrzeug 40 umfasst eine elektrische Kraftmaschine 42, die zur Energieversorgung über ein Bordnetz 44 mit einer Mehrzahl der vorstehend beschriebenen Batteriemodule 1 gekoppelt ist. Die Batteriemodule 1 sind dabei mit ihrer Längsrichtung 20 in Fahrzeugquerrichtung ausgerichtet.

### Bezugszeichenliste

- 1: Batteriemodul
- 2: Modulgehäuse
- 4: Hohlprofil
- 6: Längswand
- 8: Zellkammer
- 10: Batteriezelle
- 12: Seitenwand
- 14: Stützkammer
- 16: Trennwand
- 18: Versteifungswand
- 20: Längsrichtung
- 22: Anschlussblock
- 24: Abschlussdeckel
- 26: Zellkammerabschnitt
- 28: Stützwand
- 30: Öffnung
- 32: oberer Bereich
- 34: Zellgehäuse
- 36: Stützwandmodul

## Patentansprüche

1. Batteriemodul (1) für ein Kraftfahrzeug (40), mit einem Modulgehäuse (2), das ein langgestrecktes kastenartiges Hohlprofil (4) umfasst, das wiederum eine Zellkammer (8) zur mechanisch schützenden Aufnahme einer Mehrzahl von Batteriezellen (10) in vier Raumrichtungen umgrenzt, wobei
- die Zellkammer (8) entlang ihrer Längsrichtung (20) mittels wenigstens einer schottartigen Stützwand (28) in wenigstens zwei Zellkammerabschnitte (26) unterteilt ist, die in Längsrichtung (20) des Modulgehäuses (2) gesehen aufeinanderfolgen, und
- die Stützwand (28) innerhalb ihrer Wandfläche wenigstens eine Öffnung (30) zur Durchführung von Batteriezellen (10) und/oder Kontaktierungsmitteln zwischen den Batteriezellen (10) zweier aneinander angrenzender Zellkammerabschnitte (26) aufweist,
**dadurch gekennzeichnet, dass**
als Batteriezellen (10) Pouch-Zellen in der Zellkammer (8) aufgenommen sind, und wobei die Pouch-Zellen durch die Öffnungen (30) der Stützwand (28) hindurch gesteckt sind und sich im Wesentlichen über wenigstens zwei aneinander angrenzende Zellkammerabschnitte (26) erstrecken.

2. Batteriemodul (1) nach Anspruch 1 oder 2,
wobei die Stützwand (28) sowie das jeweilige gegebenenfalls vorhandene, angebundene Zellgehäuse (34) aus einem kurzfaserverstärkten Kunststoff spritzgegossen ist.

3. Kraftfahrzeug (40) mit einem Batteriemodul (1) nach einem der Ansprüche 1 bis 2.

## Claims

1. Battery module (1) for a motor vehicle (40), with a module housing (2) which comprises an elongate box-like hollow profile (4) which in turn defines a cell chamber (8) for mechanically protective accommodation of a plurality of battery cells (10) in four spatial directions, wherein
- the cell chamber (8) is divided along its longitudinal direction (20) by means of at least one bulkhead-like supporting wall (28) into at least two cell chamber portions (26) which follow one another, as seen in the longitudinal direction (20) of the module housing (2), and
- the support wall (28) has at least one opening (30) within its wall surface for passage of battery cells (10) and/or contacting means between the battery cells (10) of two contiguous cell chamber portions (26),
**characterized in that**
pouch cells are accommodated in the cell chamber (8) as battery cells (10), and wherein the pouch cells are inserted through the openings (30) in the support wall (28) and extend substantially over at least two contiguous cell chamber portions (26).

2. Battery module (1) according to either claim 1 or claim 2,
wherein the supporting wall (28) and, if present, the relevant connected cell housing (34) are injection-molded from a short-fiber-reinforced plastics material.

3. Motor vehicle (40) having a battery module (1) according to either of claims 1 to 2.

## Revendications

1. Module de batterie (1) pour un véhicule automobile (40), comportant un boîtier de module (2) qui comprend un profilé creux (4) allongé en forme de caisson, lequel profilé creux délimite à son tour une chambre pour éléments (8) permettant la réception mécaniquement protectrice d'une pluralité d'éléments de batterie (10) dans quatre directions spatiales, dans lequel
- la chambre pour éléments (8) est divisée le long de sa direction longitudinale (20) au moyen d'au moins une paroi de support (28) en forme de cloison en au moins deux sections de chambre pour éléments (26) qui se succèdent l'une à l'autre, vues dans la direction longitudinale (20) du boîtier de module (2), et
- la paroi de support (28) présente, à l'intérieur de sa surface de paroi, au moins une ouverture (30) pour le passage d'éléments de batterie (10) et/ou de moyens de contact entre les éléments de batterie (10) de deux sections de chambre pour éléments (26) adjacentes l'une de l'autre,
**caractérisé en ce que**
des cellules poches sont reçues dans la chambre pour éléments (8) en tant qu'éléments de batterie (10), et dans lequel les cellules poches sont enfichées à travers les ouvertures (30) de la paroi de support (28) et s'étendent sensiblement sur au moins deux sections de chambre pour éléments (26) adjacentes l'une de l'autre.

2. Module de batterie (1) selon la revendication 1 ou 2,
dans lequel la paroi de support (28) ainsi que le boîtier pour éléments (34) respectif éventuellement présent et relié sont moulés par injection en une matière plastique renforcée par des fibres courtes.

3. Véhicule automobile (40) comportant un module de batterie (1) selon l'une des revendications 1 à 2.
